# EUROPÄISCHE PATENTSCHRIFT

(11) **EP 0 409 843 B1**
(45) Veröffentlichungstag und Bekanntmachung des Hinweises auf die Patenterteilung: **09.06.1993**
(21) Anmeldenummer: 89902517.5
(22) Anmeldetag: 22.02.1989
(51) Int. Cl.: C08G 63/78

(54) **VERFAHREN ZUR HERSTELLUNG VON POLYESTERHARZEN**
PROCESS FOR PRODUCING POLYESTER RESINS
PROCEDE DE FABRICATION DE RESINES DE POLYESTER

(30) Priorität: 14.04.1988 DE 3812366
(43) Veröffentlichungstag der Anmeldung: 30.01.1991
(73) Patentinhaber: BASF Lacke + Farben AG, 48165 Münster-Hiltrup (DE)
(72) Erfinder: SADLOWSKI, Jürgen, D-4400 Münster (DE); DANGSCHAT, Manfred, D-4406 Drensteinfurt 3 (DE); DIEFENBACH, Horst, D-4405 Nottuln (DE); LASAR, Theo, D-4400 Münster (DE); SCMITT, Dieter, D-6719 Weisenheim (DE)
(74) Vertreter: Münch, Volker, Dr.
(86) Internationale Anmeldenummer: EP8900162
(87) Internationale Veröffentlichungsnummer: WO8909794

(56) Entgegenhaltungen:
- FR-A- 2 302 778
- US-A- 3 039 980
- CHEMICAL ABSTRACTS, vol. 81, no. 6, 12 August 1974, Columbus, OH (US); p. 19, no. 26194p#
- CHEMICAL ABSTRACTS, vol. 98, no. 20, 16 May 1983, Columbus, OH (US); p. 40, no. 161746m#
- INTERNATL. POLYMER SCIENCE & TECHNOLOGY (Rapra), vol. 12, no. 4, 1985, Shawbury, Shrewsbury (GB); F. LESEK, pp. T52-T57#

## Beschreibung

Die vorliegende Erfindung betrifft ein Verfahren zur Herstellung von Polyester- und Alkydharzen aus bi- und/oder höherfunktionellen Carbonsäuren und/oder Carbonsäureanhydriden und/oder Carbonsäureestern und aus bi- und/oder höherfunktionellen Alkoholen, bei dem die Reaktion in diskontinuierlich betriebenen, mit Rektifizierkolonnen ausgestatteten Rührkesselreaktoren unter Anwendung von Druck durchgeführt wird.

Gesättigte und ungesättigte Polyester und Alkyde finden insbesondere Anwendung in vernetzenden Systemen im Lackharzsektor und zur Herstellung von Duroplasten. Sie werden bevorzugt in universell einsetzbaren diskontinuierlich betriebenen Rührkesselreaktoren hergestellt. Diese Rührkesselreaktoren sind üblicherweise mit einer Wasserauskreisvorrichtung, bestehend aus Brüdenrohr, Kondensator und Trennbehälter ausgerüstet (vgl. Ullmanns Enzyclopedia of Industrial Chemistry, 5. Auflage, Vol. A1, Alkyds, Verlag Chemie, Weinheim 1985, Seiten 415-416).

Diese Reaktoranordnung hat für die Durchführung von Kondensationsreaktionen - insbesondere im Großmaßstab - eine Reihe von Nachteilen:
Der Einsatz eines einfachen Brüdenrohrs ohne Fraktionierwirkung zur Dämpfeableitung aus dem Reaktor führt infolge schwer zu kontrollierender Einsatzstoffverluste zu Verschiebungen der stöchiometrischen Zusammensetzung und damit zu Produktqualitätsschwankungen. Zur Verbesserung der Reaktionsführung sind Rektifizierkolonnen als Ersatz für das einfache Brüdenrohr vorgeschlagen worden.

Unter dem Aspekt Stoffaustausch weist der unveränderte Rührkesselreaktor eine sehr ungünstige Geometrie auf. Entscheidend für die Reaktorleistung ist, wie rasch die bei der Polyesterkondensation freigesetzte Komponente (Wasser, Alkohol), im folgenden auch als Kondensationskomponente bezeichnet, aus der Polyesterschmelze und dem Reaktor entfernt wird. Mit zunehmender Reaktorgröße verschlechtert sich die hierfür mitbestimmende spezifische Stoffaustauschfläche.

Zur Verbesserung des Transports der Kondensationskomponente aus dem Reaktor wird häufig ein mit der Kondensationskomponente nicht mischbares Schleppmittel wie z.B. Xylol oder Toluol eingesetzt. Stand der Technik ist es, dieses Schleppermittel auf die Harzschmelzoberfläche zu geben (Ullmanns Enzyclopedia of Industrial Chemistry, 5. Auflage, Vol. A1, Seite 415).

Zur Unterstützung des Austreibens der Kondensationskomponente aus der Polyesterschmelze - vor allem mit zunehmender Viskosität der Schmelze gegen Ende der Kondensationsreaktion - ist es auch möglich, einen Inertgasstrom (Stickstoff, Kohlendioxid, Argon) unter kräftigem Rühren durch oder über die Schmelze zu leiten (vgl. Kunststoff-Handbuch, Band VIII, Polyester, Hanser Verlag, München 1973, Seiten 266-269). Dieses Verfahren ist aus wirtschaftlichen Gründen aber nur in Ausnahmefällen zweckmäßig.

Auch aus der FR-A-2 302 778 ist ein Verfahren zur diskontinuierlichen Herstellung von Polyestern bekannt, bei dem ggf. unter Rühren ein Stickstoffstrom durch die Reaktionsmischung geleitet wird.
Weiterhin ist aus der US-PS 3,039,980 ein Verfahren zur Herstellung von Polyestern bekannt, bei dem das Austreiben der Kondensationskomponente dadurch unterstützt wird, daß als Schleppmittel eine inerte, unter den Reaktionsbedingungen der Veresterungsreaktion dampfförmige Flüssigkeit durch die Reaktionsmischung geleitet wird.
Sowohl bei dem Verfahren der FR-A-2 302 778 als auch bei dem Verfahren der US-PS 3,039,980 wird die Kondensationsreaktion nicht unter Überdruck durchgeführt.

In der FR-PS 1 140 847 wird die Veresterung von Terephthalsäure mit Glykolen unter Druck bei erhöhter Temperatur beschrieben. Außer der Beschreibung der bekannten, bei erhöhter Temperatur beschleunigten, Veresterungsreaktion und der Unterdrückung der Nebenproduktbildung (Tetrahydrofuran aus 1,4-Butandiol) liefert die Patentschrift keine Lehre zur Lösung des vorliegenden Problems der diskontinuierlichen Polyesterherstellung in Rührkesselreaktoren, insbesondere keinen Hinweis auf einen Schleppmitteleinsatz.

Aus der Umesterung von Dimethylterephthalat ist die Anwendung von Druck bekannt, um den Anfall unerwünschter Nebenprodukte zu reduzieren (vgl. z.B. DE-OS 23 65 934). In der AT-PS 242122 wird so z.B. die Umesterung von Dimethylterephthalat mit Ethylenglykol unter Druck unter Anwendung einer Reaktionskolonne vorgeschlagen mit dem Ziel, die unerwünschte Bildung von Diethylenglykol zu reduzieren.

In der DE-AS 11 30 433 ist ein Verfahren zur Herstellung von Terephthalsäureglykolestern beschrieben, bei dem die Umesterung von Terephthalsäurealkylestern mit Glykol unter Druck und in Gegenwart von Wasser, einer Antimon- oder einer Germaniumverbindung durchgeführt wird. Mit diesem Verfahren gelingt es, wirtschaftlich günstig farblose Produkte herzustellen. In allen diesen vorbeschriebenen Druckverfahren wird aber der der Umesterung folgende Verfahrensschritt der Kondensation unter Vakuum durchgeführt.

Trotz dieser bekannten Einzelmaßnahmen werden für die Herstellung von Polyestern und Alkyden in diskontinuierlich betriebenen Rührkesseln Prozeßzeiten aufgewandt, die unverhältnismäßig lang im Vergleich zu den theoretisch notwendigen Reaktionszeiten auf der Basis bekannter kinetischer Daten für Veresterungsreaktionen sind. Dies bedingt Qualitätsnachteile durch lange thermische Beanspruchung des Produkts und ist wirtschaftlich durch lange Reaktorbelegzeiten ebenfalls nachteilig.
Wird die Kondensationsreaktion unter Vakuum zu Ende geführt, so bedingt dies zusätzliche Qualitätsnachteile durch die oxidative Beanspruchung des Produktes.

Der Erfindung lag die Aufgabe zugrunde, ein Verfahren zur diskontinuierlichen Herstellung von Polyestern und Alkyden zu entwickeln, das insbesondere verkürzte Prozeßzeiten erlaubt, keine aufwendigen technischen Veränderungen an vorhandenen Reaktoren erfordert, einfach zu beherrschen ist und Produkte hoher und konstanter Qualität liefert.

Diese Aufgabe wird erfindungsgemäß durch ein Verfahren zur Herstellung von Polyester- und Alkydharzen aus bi- und/oder höherfunktionellen Carbonsäuren und/oder Carbonsäureanhydriden und/oder Carbonsäureestern und aus bi- und/oder höherfunktionellen Alkoholen gelöst, bei dem die Reaktion in diskontinuierlich betriebenen, mit Rektifizierkolonnen ausgestatteten Rührkesselreaktoren unter Anwendung von Druck durchgeführt wird. Es ist erfindungswesentlich, daß
1.) die Reaktionstemperatur zwischen 180 und 320°C und die effektive Dampfgeschwindigkeit über der Schmelzoberfläche zwischen 0,1 und 100 cm/s liegt,
2.) zur Verbesserung des Transports der Kondensationsprodukte während des gesamten Prozesses ein Schleppmittel durch eine Fördereinrichtung unter dem Oberflächenniveau in die Reaktionsmischung eingebracht wird,
3.) die Kondensationsreaktion bis mindestens zum Zeitpunkt der maximalen Reaktionsgeschwindigkeit unter einem konstant gehaltenen Absolutdruck zwischen 1,5 und 10 bar durchgeführt wird (Reaktionsphase I) und
4.) der Druck anschließend mit einem Gradienten von -0,05 bar/h bis -5 bar/h auf Atmosphärendruck erniedrigt wird (Reaktionsphase II).
5.) die Reaktion bei Normaldruck unter konstant gehaltener Reaktionstemperatur und Aufrechterhaltung der Schleppmittelzuführung in die Reaktionsmischung und auf den Kolonnenkopf zu Ende geführt wird (Reaktionsphase III).

Das erfindungsgemäße Polykondensationsverfahren weist insbesondere den Vorteil auf, daß die Prozeßzeiten zur Herstellung von Polyester- und Alkydharzen deutlich reduziert werden können, wodurch die Wirtschaftlichkeit des Verfahrens beträchtlich erhöht wird. Weiterhin werden die Produkte entsprechend weniger thermisch bzw. oxidativ im Vergleich zur Vakuumfahrweise beansprucht und zeichnen sich daher durch günstigere Eigenschaften - insbesondere durch eine geringere Verfärbung - gegenüber den nach den herkömmlichen Verfahren hergestellten Produkten aus.

Zur Herstellung der Polyester- und Alkydharze nach dem erfindungsgemäßen Verfahren eignen sich die üblichen an sich bekannten Aufbaukomponenten, also bi- und/oder höherfunktionelle Carbonsäuren oder geeignete Derivate wie z.B. ihre Anhydride oder Alkylester und bi- und/oder höherfunktionelle Alkohole. Die Ausgangsstoffe werden in den üblichen Mengenverhältnissen eingesetzt (vgl. z.B. Ullmanns Enzyklopädie der technischen Chemie, 4. Auflage, Band 19, Verlag Chemie, Weinheim, Seiten 61-88, sowie die dort angegebenen Literaturstellen).

Die Durchführung des erfindungsgemäßen Verfahrens erfolgt in einem diskontinuierlich betriebenen, mit Rektifizierkolonne, Kondensator, Trennbehälter, Auffangbehälter für anfallende Kondensationskomponenten, Schleppmittelrückführpumpe, ggf. Schleppmittelverdampfer, Schleppmitteleinspeisung und Inertgasanschluß versehenen heiz- und kühlbaren Rührkesselreaktor. Die benötigte Prozeßwärme kann dem Reaktor entweder durch elektrische Heizung, Hochdruckdampf oder durch ein Heizmedium zugeführt werden. Die Einstellung des jeweiligen Systemdrucks erfolgt mit Hilfe einer Druckregeleinheit unter Verwendung eines Inertgases wie beispielsweise Stickstoff. Die einzelnen Elemente des Rührkesselreaktors wie Rektifizierkolonne, Trennbehälter,Auffangbehälter und dergleichen sind jeweils handelsübliche, für den Einsatzzweck geeignete Geräte.

Für die Schleppmittelrückführung auf den Kolonnenkopf und die Einspeisung der restlichen Schleppmittelmenge in das Reaktionsgemisch werden eine oder mehrere Pumpen, wie z.B. Kreisel- oder Membranpumpen, in Verbindung mit Mengenstromreglern eingesetzt. Als Einlaßvorrichtung für das Schleppmittel unter die Oberfläche der Reaktionsmischung eignen sich z.B. ein oder mehrere Tauchrohre mit einer verengten Öffnung. Bei der Auswahl der Einlaßvorrichtung ist darauf zu achten, daß - ggf. unterstützt durch eine Rührvorrichtung - eine gute Verteilung des Schleppmittels in der Reaktionsmischung gewährleistet ist.

Zur Durchführung des erfindungsgemäßen Verfahrens wird das dem gewünschten Polyester entsprechende Rohstoffgemisch zusammen mit einem Schleppmittel im Rührkesselreaktor vorgelegt. Geeignete Schleppmittel sind mit der Kondensationskomponente nicht mischbare Lösungsmittel bzw. Lösungsmittelgemische wie beispielsweise Xylol oder Toluol, die zwar mit der austretenden Kondensationskomponente, nicht aber mit den eingesetzten Rohstoffen, insbesondere den Polyolen, ein Minimumazeotrop bilden dürfen. Die zugesetzte Schleppmittelmenge beträgt 0,5 bis 10 Gew.%, bevorzugt 2 bis 4 Gew.%, jeweils bezogen auf das Gesamtgewicht der Ausgangsstoffe. Die für die jeweils durchzuführende Reaktion günstigste Schleppmittelmenge kann aber durch Versuche leicht bestimmt werden.

Als nächstes wird die Reaktionsanlage durch Einspeisen eines Inertgases auf einen absoluten Systemdruck von 1,5 bis 10 bar, bevorzugt 2 bis 5 bar, gebracht und danach möglichst schnell auf die jeweilige Reaktionstemperatur aufgeheizt. Je nach den eingesetzten Ausgangsverbindungen liegt die Reaktionstemperatur zwischen 180 und 320^{o}C, bevorzugt zwischen 200 und 300^{o}C und ganz besonders bevorzugt zwischen 240 und 280^{o}.

In der Regel liegt die Reaktionstemperatur bei dem erfindungsgemäßen Verfahren über der Temperatur, bei der die Reaktion mit denselben Komponenten üblicherweise unter Atmosphärendruck durchgeführt wird.

Ist die Reaktionstemperatur so hoch, daß das Sieden der Reaktionsmischung einsetzt, wird bzw. werden die Schleppmittelpumpe bzw. -pumpen in Betrieb genommen. Das aus dem Kondensator abfließende Schleppmittel/Kondensationsprodukt-Gemisch wird in den Trennbehälter getrennt. Das Kondensationsprodukt wird ausgeschleust. Das Schleppmittel wird so aufgeteilt, daß auf den Kopf der Rektifizierkolonne stets mindestens die für eine gute Trennwirkung der Kolonne erforderliche Mindestrücklaufmenge gegeben wird. Die übrige Schleppmittelmenge wird der Reaktionsmischung zugeführt. Durch diese Aufteilung der insgesamt zugeführten Schleppmittelmenge wird die flüssige Rückführmenge durch die Kolonne gegenüber dem üblichen Kolonnenbetrieb mit Schlepperdestillation mit vollständigem Schleppmittelrückfluß durch die Kolonne von dem in der Kolonne aufsteigenden Dampfmengenstrom entkoppelt. Damit werden die im wesentlichen durch den flüssigen Rücklauf in der Kolonne begrenzten möglichen maximalen Dampfmengenströme durch die Kolonne erhöht.

Es ist zwar möglich, das Schleppmittel flüssig in das Reaktionsgemisch einzutragen, aber es ist bevorzugt, das Schleppmittel in einem Verdampfer vorzuverdampfen, insbesondere, wenn größere Schleppmittelmengen (wie sie bei der Polyesterherstellung im techischen Maßstab anfallen) zurückgeführt werden. Eine besonders bevorzugte Verfahrensvariante ist es, das vorverdampfte Schleppmittel vor dem Einbringen in den Reaktor mindestens auf die Temperatur der Reaktionsmischung aufzuheizen. Die Einspeisung des Schleppmittels unter das Oberflächenniveau der Reaktionsmischung kann mit Hilfe einer oder mehrerer Düsen erfolgen, wobei es zur Erhöhung des Stoffaustausches wesentlich ist, daß das Schleppmittel durch die Einlaßvorrichtung - ggf. unterstützt durch eine Rührvorrichtung - in der Reaktionsmischung gut verteilt ist. Besonders vorteilhaft ist es daher, das Schleppmittel im unteren Drittel des Rührkessels zuzuführen.

Die in das Reaktionsgemisch eingeleitete Schleppmittelmenge liegt zwischen 0,03 und 2 m³/h, bevorzugt zwischen 0,3 und 1 m³/h, flüssigem Schleppmittel pro m³ Reaktionsmischung. Im Laufe des Prozesses wird die Schleppmittelrückführungsmenge gesteigert und dadurch die mit zunehmendem Umsatz zurückgehende Menge der Kondensationskomponente substituiert, so daß die Dampfgeschwindigkeit über der Schmelzoberfläche auf etwa gleichmäßigem Niveau gehalten wird.
Um einen möglichst guten Stoffaustausch zu erzielen, sollte die in das Reaktionsgemisch eingeleitete Schleppmittelmenge möglichst hoch sein. Die maximal in die Reaktionsmischung zurückführbare Schleppmittelmenge wird aber dadurch begrenzt, daß die Schaumbildungsneigung der Reaktionsmischung beherrschbar bleiben muß. Außerdem wird die maximal zurückführbare Schleppmittelmenge durch die maximal im Reaktor bzw. im Vorverdampfer verdampfbare Schleppmittelmenge, die über die Temperatur der Reaktionsmischung und/oder die Temperatur des Vorverdampfers beeinflußt werden kann, begrenzt.
Der Systemdruck der Reaktionsanlage wird mindestens solange bei einem konstanten Wert zwischen 1,5 und 10 bar, bevorzugt zwischen 2 und 5 bar, gehalten, bis die maximale Reaktionsgeschwindigkeit der Kondensationsreaktion erreicht ist. Bestimmt wird dieser Zeitpunkt der maximalen Reaktionsgeschwindigkeit durch Messen des Maximums der Geschwindigkeit des Anfalls der Kondensationskomponente im Trennbehälter.
Im Anschluß an diese Reaktionsphase I wird der Druck mit einem Gradienten von -0,05 bar/h bis -5 bar/h auf Atmospärendruck erniedrigt (Reaktionsphase II).
Entscheidend bei dem erfindungsgemäßen Verfahren ist, daß die Prozeßparameter Druck, Reaktortemperatur und in die Reaktionsmischung zurückgeführte Schleppmittelmenge so aufeinander abgestimmt werden, daß die resultierenden effektiven Dampfvolumenströme aus entbundener Kondensationskomponente, Schleppmitteldampf und partiell mitverdampfenden Einsatzstoffen über der Schmelzoberfläche im Reaktor und insbesondere in der Rektifizierkolonne einerseits möglichst hoch, andererseits aber hydrodynamisch beherrschbar sind, d.h. daß der Tröpfchenmitriß beherrschbar und die Schaumbildung kontrollierbar sind. Diese Beherrschbarkeit ist dann gegeben, wenn die effektive Dampfgeschwindigkeit über der Schmelzoberfläche zwischen 0,1 und 100 cm/s, bevorzugt zwischen 0,5 und 20 cm/s, liegt. Für Rektifizierkolonnen mit geordneten Packungen, z.B. Metallgewebepackungen, wie der z.B. der Rektifizierkolonne mit Streckmetallpackung, Typ Sulzer BX, sollte die effektive Dampfgeschwindigkeit in der Rektifizierkolonne zwischen 0,5 und 5 m/s und bevorzugt zwischen 1 und 3,5 m/s bei entsprechend angepaßter Berieselungsdichte betragen. Werden andere Rektifizierkolonnen eingesetzt, sind die entsprechenden effektiven Dampfgeschwindigkeiten in der Kolonne an Hand der Kenndaten der Kolonne zu ermitteln.
Die Reaktion wird schließlich während der Reaktionsphase III bei Normaldruck und konstant gehaltener Reaktionstemperatur unter Aufrechterhaltung der Schleppmittelzuführung in die Reaktionsmischung und auf den Kolonnenkopf solange fortgesetzt, bis das Produkt die gewünschten Eigenschaften, wie Säurezahl, OH-Zahl, Viskosität und dergleichen aufweist. Anschließend erfolgt die Aufarbeitung des Polyesterharzes nach den üblichen Verfahren.

Das erfindungsgemäße Verfahren soll nun anhand eines Ausführungsbeispiels erläutert werden. Sofern nicht anders angegeben, sind %-Angaben Gewichtsprozentangaben.

### Beispiel 1

Das nachfolgende Beispiel beschreibt das erfindungsgemäße Verfahren anhand einer Polyestersynthese in einer 100-Liter-Reaktionsapparatur.

Der Reaktor ist mit einer Rektifizierkolonne mit Streckmetallpackung Typ Sulzer BX, einem Kondensator, einem Trennbehälter und einem Auffangbehälter für anfallende Kondensationsflüssigkeiten ausgerüstet. Für die Schleppmittelrückführung auf den Kolonnenkopf und die Einspeisung der restlichen Schleppmittelmenge in das Reaktionsgemisch wird eine Pumpe eingesetzt. Der Absolutdruck in der Reaktionsanlage ist durch eine Druckregelung auf 2 bar einstellbar.

In dem Reaktor werden 16,7 kg Isononansäure, 21,8 kg Trimethylolpropan, 2,40 kg Xylol (Schleppmittel) und 23,8 kg Phthalsäureanhydrid vorgelegt.

Dann wird der Absolutdruck in der Reaktionsanlage durch Einspeisen von Stickstoffgas auf 2 bar eingestellt. Während der Synthese wird dieser Druck durch die Druckregelung bis zu einem Umsatz von ca. 67 % konstant gehalten (Reaktionsphase I).

Nach Einregulierung des Drucks wird der Reaktorinhalt bei intensiver Rührung mit einer Geschwindigkeit von ca. 80^{o}C/h bis auf 260^{o}C aufgeheizt. Nach Siedebeginn bei ca. 176^{o}C wird die Schleppmittelpumpe in Betrieb gesetzt. Das aus dem Kondensator abfließende Flüssigkeitsgemisch aus Wasser und Schleppmittel wird in dem Trennbehälter getrennt. Das Reaktionswasser wird ausgeschleust. Es enthält nur sehr geringe Mengen organischer Bestandteile. Das Schleppmittel wird nach Durchlauf durch die Schleppmittelpumpe so aufgeteilt, daß die Rektifizierkolonne stets mit mindestens der Mindestrücklaufmenge beaufschlagt wird. Die darüber hinaus zur Verfügung stehende Schleppmittelmenge wird dem Reaktor durch ein mit einer verengten Öffnung versehenes - in die Harzschmelze ragendes - Tauchrohr zugeführt. Mit steigender Reaktionstemperatur steigt der Umlauf des Schleppmittels, so daß dementsprechend die in die Schmelze eingespeiste Schleppmittelmenge bis auf ca. 30 l Xylol pro Stunde gesteigert werden kann.

Bei einem Umsatz von ca. 67 % (3/4 Stunde nach Reaktionsgeschwindigkeitsmaximum) wird der Systemdruck der Reaktionsanlage mit 8,0 mbar/min auf atmosphärische Bedingungen zurückgefahren (Reaktionsphase II). Die Unterspiegelzuführung des Schleppmittels wird aber bis zum Ende der Reaktion fortgeführt.

Unter Atmosphärendruck wird nun die Reaktionstemperatur solange bei 260^{o}C gehalten (Reaktionsphase III), bis das Reaktionsprodukt eine Säurezahl von 17 mg KOH/g (fest) aufweist und die Viskosität der in Xylol angelösten Probe (60 % Festkörper) bei 23^{o}C 5,5 dPas beträgt.

Dann wird der Reaktorinhalt auf 200^{o}C abgekühlt und die Pumpe für die Kolonnenkopfaufgabe und die Unterspiegelzugabe des Schleppmittels abgefahren. Danach erfolgt die Aufarbeitung des Polyesterharzes nach den üblichen Verfahren.

Die Reaktionszeit der beschriebenen Synthese vom Aufheizbeginn bis zum Erreichen der Kennzahlen bei 260^{o}C Produkttemperatur nach Ende der Reaktionsphase III beträgt 4,5 h.

### Vergleichsbeispiel

Als Reaktionsanlage wird wie im Beispiel 1 beschrieben, ein 100 Liter-Reaktor eingesetzt. Die apparative Anlagenperipherie besteht aus einer Kolonne, einem Kondensator, einem Trennbehälter, einem Auffangbehälter für anfallende Reaktionsflüssigkeiten und einer Kreiselpumpe für die Schleppmittelrückführung auf den Kolonnenkopf. Die Reaktionsanlage wird atmosphärisch betrieben.

In den Reaktor werden analog zum Beispiel 1 16,7 kg Isononansäure, 21,8 kg Trimethylolpropan, 2,40 kg Xylol (Schleppmittel) und 23,8 kg Phthalsäureanhydrid eingewogen.

Die Reaktortemperatur wird nun innerhalb von 5 h von 30^{o}C auf 220^{o}C angehoben. Ein schnelleres Aufheizen oder höhere Synthesetemperaturen als 220^{o}C führen unmittelbar zum Aufschäumen des Reaktorinhalts und damit zum Zusetzen der Kolonnen- und Abgaswege.
Bei ca. 166^{o}C Reaktortemperatur beginnt die Reaktion. Analog zu Beispiel 1 wird das aus dem Kondensator abfliessende Schleppmittel-/Wasser-Gemisch in dem Trennbehälter getrennt und das Reaktionswasser ausgeschleust. Das Schleppmittel, ca. 5 Liter/h, wird vollständig auf den Kolonnenkopf zurückgeführt. Die Produkttemperatur wird bei 220^{o}C gehalten, bis das Reaktionsprodukt eine Säurezahl von 17 mg KOH/g (fest) aufweist und die Viskosität der in Xylol angelösten Probe (60 % Festkörper) bei 23^{o}C 5,5 dPas beträgt.

Nach dem Abfahren der Kolonnenkopfaufgabepumpe wird der Reaktionsinhalt auf 200^{o}C abgekühlt und nach den üblichen Verfahren aufgearbeitet.
Die Reaktionszeit der beschriebenen Synthese, vom Aufheizbeginn bis zum Erreichen der Kennzahlen bei 220^{o}C beträgt 11 h.

## Patentansprüche

1. Verfahren zur Herstellung von Polyester- und Alkydharzen aus bi- und/oder höherfunktionellen Carbonsäuren und/oder Carbonsäureanhydriden und/oder Carbonsäureestern und aus bi- und/oder höherfunktionellen Alkoholen, bei dem die Reaktion in diskontinuierlich betriebenen, mit Rektifizierkolonnen ausgestatteten Rührkesselreaktoren unter Anwendung von Druck durchgeführt wird, dadurch gekennzeichnet, daß
A) die Reaktionstemperatur zwischen 180 und 320°C und die effektive Dampfgeschwindigkeit über der Schmelzoberfläche zwischen 0,1 und 100 cm/s liegt,
B) zur Verbesserung des Transports der Kondensationsprodukte während des gesamten Prozesses ein Schleppmittel durch eine Fördereinrichtung unter dem Oberflächenniveau in die Reaktionsmischung eingebracht wird,
C) die Kondensationsreaktion bis mindestens zum Zeitpunkt der maximalen Reaktionsgeschwindigkeit unter einem konstant gehaltenen Absolutdruck zwischen 1,5 und 10 bar durchgeführt wird (Reaktionsphase I),
D) der Druck anschließend mit einem Gradienten von - 0,05 bar/h bis - 5 bar/h auf Atmosphärendruck erniedrigt wird (Reaktionsphase II) und
E) die Reaktion bei Normaldruck unter konstant gehaltener Reaktionstemperatur und Aufrechterhaltung der Schleppmmittelzuführung in die Reaktionsmischung und auf den Kolonnenkopf zu Ende geführt wird (Reaktionsphase III).

2. Verfahren nach Anspruch 1, dadurch gekennzeichnet, daß die effektive Dampfgeschwindigkeit über der Schmelzoberfläche zwischen 0,5 und 20 cm/s liegt.

3. Verfahren nach Anspruch 1 oder 2, dadurch gekennzeichnet, daß das Schleppmittel vor dem Einbringen in den Reaktor in einem Verdampfer vorverdampft wird.

4. Verfahren nach Anspruch 3, dadurch gekennzeichnet, daß das vorverdampfte Schleppmittel vor dem Einbringen in den Reaktor auf mindestens die Reaktionstemperatur der Schmelze aufgeheizt wird.

5. Verfahren nach Anspruch 1 bis 4, dadurch gekennzeichnet, daß das Schleppmittel im unteren Drittel des Rührkessels zugeführt wird.

6. Verfahren nach Anspruch 1 bis 5, dadurch gekennzeichnet, daß die Reaktionsphase I der Kondensationsreaktion unter einem Absolutdruck 2 bis 5 bar durchgeführt wird.

7. Verfahren nach Anspruch 1 bis 6, dadurch gekennzeichnet, daß die Reaktionstemperatur zwischen 200 und 300°C liegt.

8. Verfahren nach Anspruch 1 bis 7, dadurch gekennzeichnet, daß die Reakionstemperatur zwischen 240 und 280°C liegt.

## Claims

1. Process for the preparation of polyester and alkyd resins from bifunctional and/or polyfunctional carboxylic acids and/or carboxylic anhydrides and/or carboxylic acid esters and from bifunctional and/or polyfunctional alcohols, in which the reaction is carried out with the application of pressure in stirred kettle reactors which are operated discontinuously and equipped with rectifying columns, characterised in that
A) the reaction temperature is between 180 and 320°C and the effective vapour velocity over the surface of the melt is between 0.1 and 100 cm/s.
B) during the entire process an entraining agent is introduced into the reaction mixture below surface level by means of a delivery device in order to improve the transport of the products of the condensation reaction,
C) the condensation reaction is carried out under an absolute pressure between 1.5 and 10 bar which is kept constant until at least the time when the reaction rate is at the maximum (reaction phase I) and
D) the pressure is then reduced to atmospheric pressure at a gradient of -0.05 bar/hour to -5 bar/hour (reaction phase II),
E) the reaction is completed under normal pressure while the reaction temperature is kept constant and the admission of entraining agent into the reaction mixture and to the head of the column is maintained (reaction phase III).

2. Process according to Claim 1, characterised in that the effective vapour velocity over the surface of the melt is between 0.5 and 20 cm/s.

3. Process according to Claim 1 or 2, characterised in that the entraining agent is previously vapourised in a vapouriser before being introduced into the reactor.

4. Process according to Claim 3, characterised in that the previously vapourised entraining agent is heated to at least the reaction temperature of the melt before being introduced into the reactor.

5. Process according to Claim 1 to 4, characterised in that the entraining agent is fed within the lower third of the stirred kettle.

6. Process according to Claim 1 to 5, characterised in that the reaction phase I of the condensation reaction is carried out under an absolute pressure of 2 to 5 bar.

7. Process according to Claim 1 to 6, characterised in that the reaction temperature is between 200 and 300°C.

8. Process according to Claim 1 to 7, characterised in that the reaction temperature is between 240 and 280°C.

## Revendications

1. Procédé de fabrication de résines polyesters et alkydes à partir d'acides carboxyliques et/ou d'anhydrides d'acides carboxyliques et/ou d'esters d'acides carboxyliques bi-fonctionnels et/ou de fonctionnalité supérieure et à partir d'alcools bi-fonctionnels et/ou de fonctionnalité supérieure, procédé suivant lequel la réaction est effectuée avec application de pression, dans des réacteurs à cuve agitée, fonctionnant en discontinu, équipés de colonnes de rectification, caractérisé par le fait que :
(A) la température de réaction se situe entre 180 et 320°C et la vitesse effective de la vapeur au-dessus de la surface de la masse en fusion se situe entre 0,1 et 100 cm/s ;
(B) pour l'amélioration de transport des produits de condensation pendant la totalité du procédé, un agent d'entraînement est introduit dans le mélange réactionnel par un dispositif transporteur au-dessous du niveau de la surface ;
(C) la réaction de condensation est conduite au moins jusqu'à l'instant de la vitesse de réaction maximale sous une pression absolue maintenue de façon constante entre 1,5 et 10 bars (phase de réaction I) ;
(D) la pression est ensuite ramenée à la pression atmosphérique avec un gradient de -0,05 bar/h jusqu'à -5 bars/h (phase de réaction II) ; et
(E) la réaction est conduite à achèvement à la pression normale sous une température de réaction maintenue constante et avec maintien de l'introduction de l'agent d'entraînement dans le mélange réactionnel et en tête de colonne (phase de réaction III).

2. Procédé selon la revendication 1, caractérisé par le fait que la vitesse effective de la vapeur au-dessus de la surface de la masse en fusion se situe entre 0,5 et 20 cm/s.

3. Procédé selon l'une des revendications 1 ou 2, caractérisé par le fait que l'agent d'entraînement est soumis à une évaporation préalable, dans un évaporateur avant l'introduction dans le réacteur.

4. Procédé selon la revendication 3, caractérisé par le fait que l'agent d'entraînement ayant été soumis à une évaporation préalable avant l'introduction dans le réacteur est chauffé au moins à la température de réaction de la masse en fusion.

5. Procédé selon l'une des revendications 1 à 4, caractérisé par le fait que l'agent d'entraînement est introduit dans le tiers inférieur de la cuve agitée.

6. Procédé selon l'une des revendications 1 à 5, caractérisé par le fait que la phase de réaction I du réacteur de condensation est conduite sous une pression absolue de 2 à 5 bars.

7. Procédé selon l'une des revendications 1 à 6, caractérisé par le fait que la température de réaction se situe entre 200 et 300°C.

8. Procédé selon l'une des revendications 1 à 7, caractérisé par le fait que la température de réaction se situe entre 240 et 280°C.
